Europäisches Patentamt

European Patent Office

Office européen des brevets

(11) Numéro de publication: **0 061 368**

**A1**

## (12) DEMANDE DE BREVET EUROPEEN

(21) Numéro de dépôt: **82400323.0**

(22) Date de dépôt: **24.02.82**

(51) Int. Cl.³: **F 16 D 3/20**
**B 23 K 15/00, B 23 K 26/00**
**F 16 D 1/06**

(30) Priorité: **19.03.81 FR 8105490**

(43) Date de publication de la demande:
**29.09.82 Bulletin 82/39**

(84) Etats contractants désignés:
**AT BE DE GB IT NL SE**

(71) Demandeur: **REGIE NATIONALE DES USINES RENAULT**
**Boite postale 103 8-10 avenue Emile Zola**
**F-92109 Boulogne-Billancourt(FR)**

(72) Inventeur: **Jan, Michel**
**3, Square Guy de Maupassant**
**F-78510 Triel sur seine(FR)**

(72) Inventeur: **Hernert, Jacques**
**Ruelle des Princes**
**F-95440 Ecouen(FR)**

(72) Inventeur: **Le Dret, Patrick**
**17, rue des Anciens Béliers**
**F-78730 Rochefort en Yvelines(FR)**

(74) Mandataire: **Ernst-Schonberg, Michel et al,**
**R.N.U.R. S. 0804 B.P. 103 8 & 10, avenue Emile-Zola**
**F-92109 Boulogne Billancourt(FR)**

(54) Elément de joint homocinétique du type tripode.

(57) Un élément de joint homocinétique notamment pour la transmission de puissance pour véhicules automobiles, comporte un fourreau (3) destiné à recevoir un tripode (7, 9, 11) et dont une extrémité coopère avec une pièce rapportée (13), qui est soudée par bombardement électronique ou par rayon laser sur l'extrémité précitée du fourreau (3).

FIG.1

EP 0 061 368 A1

Elément de joint homicinétique du type tripode.

La présente invention est relative à un élément de joint homocinétique et concerne plus particulièrement un joint du type tripode.

Dans de tels joints, il est connu de réaliser l'élément de réception du tripode en assemblant par soudage, par frottement notamment, un fourreau et un bout d'arbre.

Pour éviter que les bavures ou éclaboussures résultant de l'opération de soudure ne viennent compromettre le bon fonctionnement des galets du tripode, il est indispensable d'inclure dans le cycle de fabrication une ou plusieurs opérations supplémentaires notamment de nettoyage et de séchage de l'intérieur du fourreau.

Ces contraintes se traduisent par une plus grande complexité des moyens de fabrication et par conséquent par un prix de revient plus élevé.

La présente invention a pour but de remédier aux inconvénients précités en proposant un élément pour joint homocinétique de fabrication aisée, ne nécessitant aucune opération de nettoyage, ledit élément du type comportant un fourreau destiné à recevoir un tripode et dont une extrémité coopère avec une pièce rapportée, étant caractérisé en ce que ladite pièce est soudée par bombardement électronique ou par rayon laser sur l'extrémité précitée du fourreau.

Selon une autre caractéristique de l'invention la profondeur de pénétration de la soudure est inférieure à l'épaisseur de la paroi du fourreau de manière à ne pas déboucher à l'intérieur de celui-ci.

Selon un premier mode d'exécution de l'invention le fourreau et au moins une portion de la pièce précitée présentent une forme trilobée.

Selon un second mode d'exécution de l'invention le fourreau présente la forme d'une coupole dans laquelle est fixé un tripode.

D'autres caractéristiques et avantages de la présente invention apparaîtront plus clairement à la suite de la description que va suivre de quelques modes de réalisation donnés uniquement à titre d'exemples et représentés aux dessins annexés dans lesquels :

- la figure 1 représente en coupe axiale un premier mode d'exécution de l'invention ;

- la figure 2 représente une coupe selon 2-2 de la figure 1 ;

- la figure 3 représente en coupe axiale partielle une première variante de la figure 1 ;

- la figure 4 représente partiellement une deuxième variante de la figure 1 ;

- la figure 5 représente de face un élément de la figure 4 ;

- la figure 6 représente partiellement encore une autre variante de la figure 1.

- la figure 7 représente en coupe axiale un second mode d'exécution de l'invention.

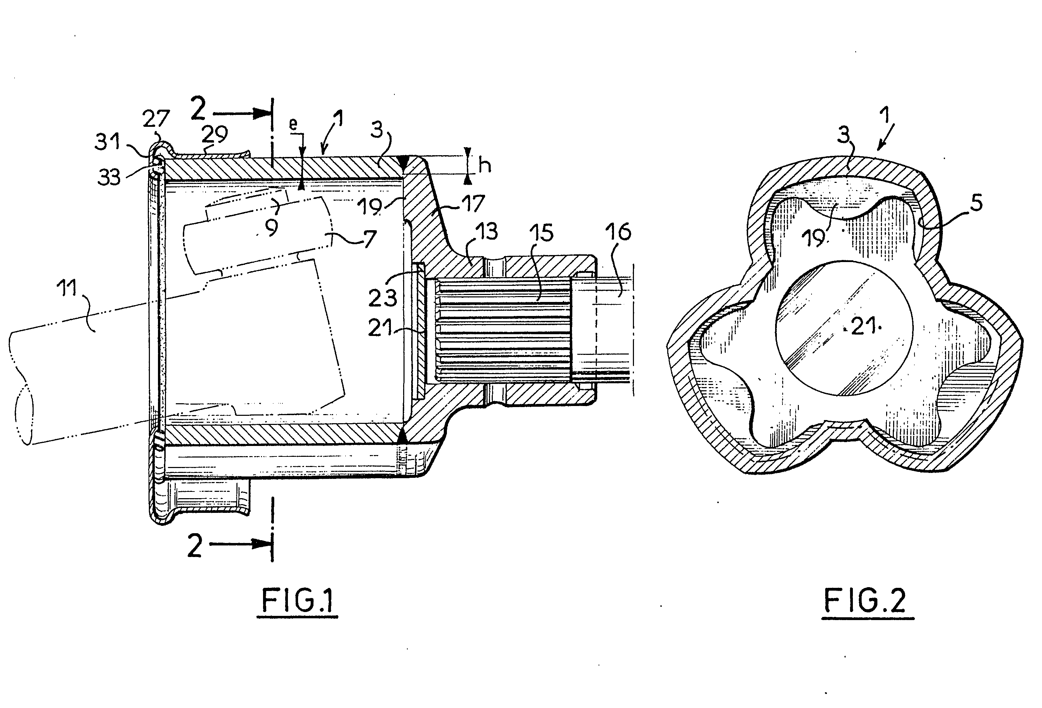

Les figures 1 et 2 représentent un joint homocinétique de transmission de puissance du type tripode et plus particulièrement un joint dit intérieur destiné à être relié à la sortie d'un différentiel et comprenant un élément 1 comportant d'une part un fourreau 3, obtenu de préférence par formage, et de forme générale trilobée délimitant trois chemins de roulement 5 pour des galets 7 montés sur des tourillons 9 prévus à l'extrémité d'un arbre 11, et d'autre part une pièce rapportée constituée par un embout creux 13 obtenu de préférence par forgeage et comprenant un moyeu 15 destiné à recevoir l'arbre de sortie 16 du différentiel et qui se prolonge par un épaulement 17 de forme également trilobée présentant des surépaisseurs radiales 19 au niveau de chacun des lobes ; l'extrémité adjacente du fourreau est rendue solidaire de l'épaulement par un procédé de soudage par bombardement électronique ou par rayon laser dont la mise en oeuvre est contrôlée de manière à ce que la profondeur de pénétration h de la soudure soit inférieure à l'épaisseur e de la paroi du fourreau afin d'éviter qu'elle ne débouche à l'intérieur de celui-ci et qu'elle n'y crée des éclaboussures ou bavures, causes de rupture du joint.

Il y a lieu de remarquer que l'extrémité du moyeu comporte un bouchon d'étanchéité 21 serti dans une encoche 23 pratiquée à la base de l'épaulement.

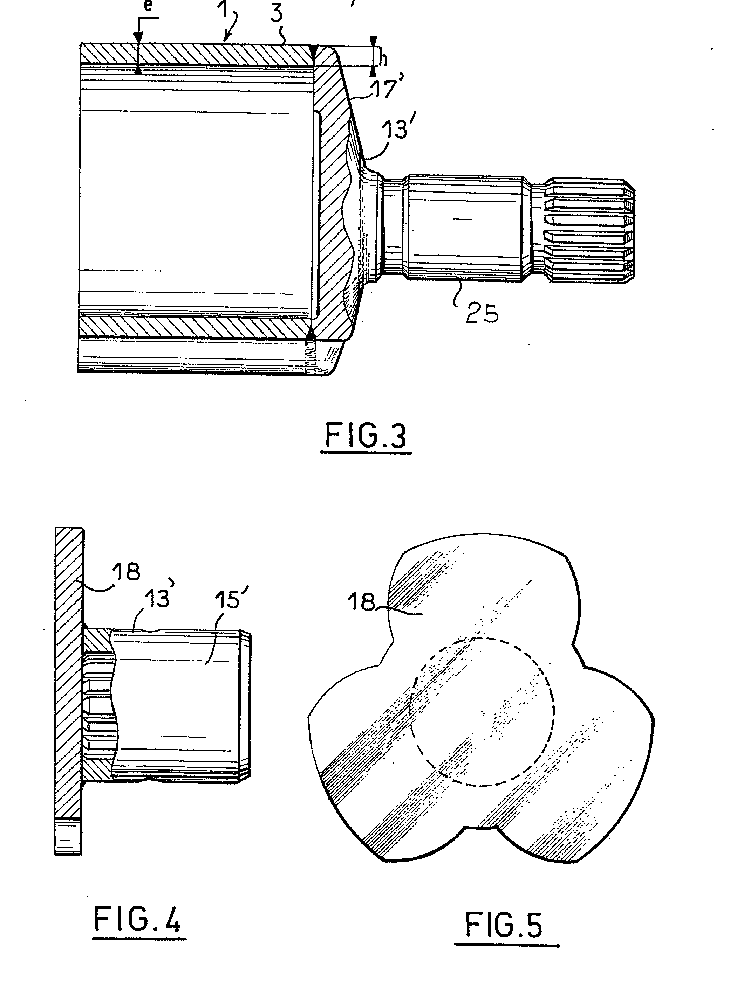

La figure 3 représente partiellement une variante qui diffère du mode d'exécution, objet de la figure 1, par le seul fait que l'embout 13' est constitué d'une pièce massive dont une extrémité de forme trilobée 17' est soudée selon le procédé et dans les conditions décrits précédemment, au fourreau et dont le corps est formé d'un bout d'arbre 25 dont l'extrémité est cannelée de manière à coopérer directement avec le différentiel.

Les figures 4 et 5 représentent une autre variante de réalisation de l'embout 13', celui-ci étant constitué d'une portion de tube formant moyeu 15' dont l'extrémité est rendue solidaire, par soudage par friction par exemple, d'une entretoise 18 de forme extérieure tribolée (figure 5), soudée par bombardement électronique ou par rayon laser à l'extrémité adjacente du fourreau 3 dans les mêmes conditions de pénétration définies précédemment.

La liaison étanche du soufflet (non représenté) et du fourreau est assurée comme représenté à la figure 1 par un capot 27 en tôle de forme extérieure ronde comprenant une portion axiale 29 rendue solidaire des sommets des lobes du fourreau par sertissage ou de préférence par soudage et notamment par l'utilisation de l'appareillage de soudage par bombardement électronique ou rayon laser, et une portion radiale 31 présentant une ouverture de forme également tribolée dont l'étanchéité avec l'extrémité du fourreau est assurée par l'interposition d'un joint 33 de préférence tribolé adhérisé ou non au capot.

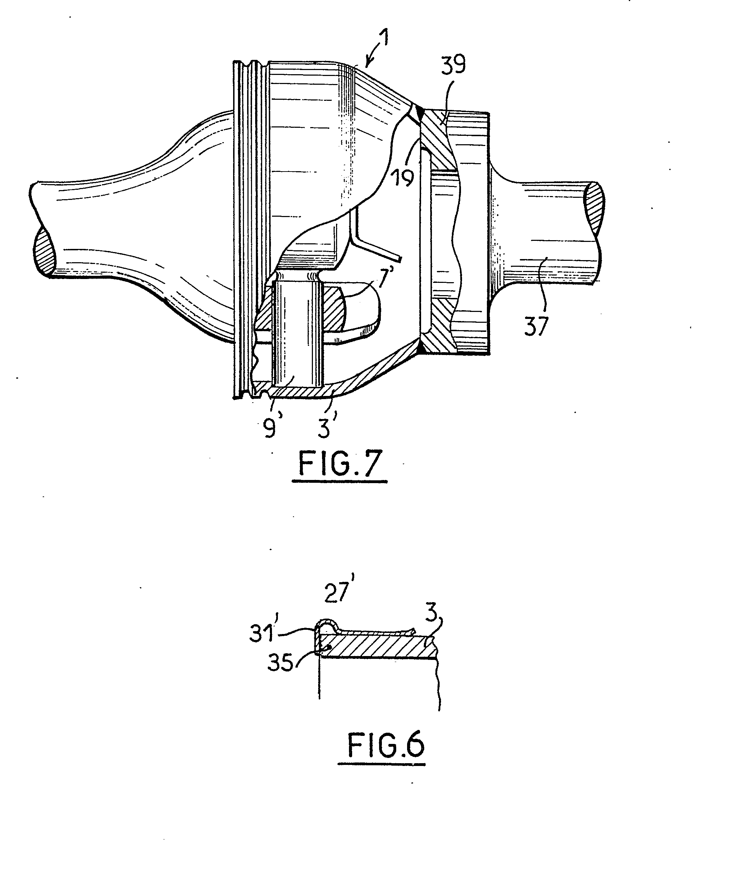

Selon une variante représentée partiellement à la figure 6, le capot 27' est emmanché à force sur les sommets des lobes tandis que sa portion radiale 31' est soudée par bombardement électronique ou par rayon laser sur l'extrémité radiale adjacente 35 du fourreau.

Bien entendu le capot peut être réalisé en caoutchouc dur ou en un matériau synthétique de caractéristiques équivalentes.

La figure 7 représente partiellement l'application de l'invention à un joint homocinétique du type tripode, dit extérieur, destiné à être monté entre un arbre de transmission et une roue de véhicule par exemple et dans lequel l'embout, constitué généralement par l'arbre mené 37, présente à son extrémité un épaulement 39 qui est soudé par bombardement électronique ou par rayon laser, dans les conditions de pénétration $h < e$ définies précédemment, à un fourreau 3' qui se présente sous la forme d'un bol dans lequel est destiné à venir se fixer un organe en forme de tripode comportant des tourillons 9' sur lesquels sont montés rotatifs et coulissants des galets 7'.

Bien entendu, le fourreau de la présente variante peut comporter un capot et un joint de formes correspondantes.

Par ailleurs, le capot 27 de la figure 1 ou 27' de la figure 6 peut être emmanché libre sur le sommet des lobes pour être ensuite soudé, par bombardement électronique ou par rayon laser, directement et sans l'interposition de joint, sur l'extrémité radiale adjacente 35 du fourreau ; selon le procédé de soudage utilisé, le capot est recouvert ou non d'une couche de zinc.

Enfin, la profondeur de pénétration de la soudure peut être différente selon que l'on se trouve au niveau des lobes, où elle présente généralement une valeur élevée, ou dans la forme en creux entre deux lobes, où la profondeur est plus faible. Dans la variante de réalisation illustrée par les figures 4 et 5, l'embout 13' peut-être soudé par faisceaux d'électrons ou laser à l'entretoise 18 sur laquelle est prévue une protubérance.

REVENDICATIONS

1. Elément de joint homocinétique comportant un fourreau destiné à recevoir un tripode et dont une extrémité coopère avec une pièce rapportée par soudage, caractérisé en ce que ladite pièce est soudée par bombardement électronique ou par rayon laser sur l'extrémité précitée du fourreau sur une profondeur de pénétration inférieure à l'épaisseur de la paroi du fourreau pour que la soudure ne débouche pas à l'intérieur de celui-ci.

2. Elément selon la revendication 1, caractérisé en ce que la pièce est constituée par une entretoise rendue solidaire, par soudage par exemple, d'une portion de tube destinée à recevoir un arbre menant.

3. Elément selon la revendication 1, caractérisé en ce que la pièce est constituée d'un embout comprenant un moyeu qui se prolonge par un épaulement radial lié au fourreau.

4. Elément selon la revendication 1, caractérisé en ce que la pièce est constituée par un bout d'arbre qui se prolonge par un épaulement radial lié au fourreau.

5. Elément selon l'une des revendications 1 à 4, caractérisé en ce que le fourreau et au moins une portion de la pièce précitée présentent une forme trilobée.

6. Elément selon l'une des revendications 1 à 5, caractérisé en ce qu'un capot trilobé est fixé notamment par bombardement électronique ou par rayon laser sur l'autre extrémité du fourreau.

7. Elément selon la revendication 6, caractérisé en ce qu'un joint trilobé est interposé entre ledit capot et l'extrémité précitée du fourreau.

8. Elément selon l'une des revendications 1 à 4, caractérisé en ce que le fourreau présente la forme d'une coupole dans laquelle est fixé un tripode.

9. Elément selon la revendication 8, caractérisé en ce qu'un capot est fixé par soudage ou sertissage sur l'autre extrémité du fourreau.

10. Elément selon la revendication 2, caractérisé en ce que l'entretoise présente une protubérance permettant son soudage par bombardement électronique ou rayonnement laser, à ladite portion de tube.

FIG.1

FIG.2

1/3

0061368

0061368

FIG.3

FIG.4

FIG.5

FIG.7

FIG.6

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR - A - 2 408 759 (TOYOTA JIDOSHA) <br><br> * en entier * <br><br> -- | 1 à 5, 8,10 | F 16 D 3/20 <br> B 23 K 15/00 <br> 26/00 <br> F 16 D 1/06 |
| Y | FR - A - 2 442 689 (NISSAN MOTOR) <br><br> * en entier * <br><br> -- | 1 à 5, 8,10 | |
| Y | FR - A - 521 562 (EMERSON) <br><br> * en entier * <br><br> -- | 1,2,5 | |
| Y | FR - A - 2 370 887 (GLACIER METAL) <br><br> * en entier * <br><br> -- | 1,2 | **DOMAINES TECHNIQUES RECHERCHES (Int. Cl. ³)** |
| A | FR - A - 1 351 906 (C.E.N.) <br><br> ------------- | | F 16 D 3/00 <br> 1/00 <br> B 23 K |

Le présent rapport de recherche a été établi pour toutes les revendications

| Lieu de la recherche | Date d'achèvement de la recherche | Examinateur |
|---|---|---|
| La Haye | 14-06-1982 | BALDWIN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\- - - - - -

& : membre de la même famille, document correspondant

OEB Form 1503. 03.82